(19) Europäisches Patentamt
European Patent Office
Office européen des brevets

(11) **EP 4 092 583 A1**

(12) **EUROPEAN PATENT APPLICATION**

(43) Date of publication:
**23.11.2022 Bulletin 2022/47**

(21) Application number: **21174414.9**

(22) Date of filing: **18.05.2021**

(51) International Patent Classification (IPC):
**G06N 7/00** (2006.01)　　**G05B 13/02** (2006.01)
**G06N 20/10** (2019.01)

(52) Cooperative Patent Classification (CPC):
**G06N 20/10; G05B 13/027; G06N 7/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Büttner, Florian**
**81541 München (DE)**
• **Yang, Yinchong**
**85579 Neubiberg (DE)**

(54) **A SYSTEM AND METHOD FOR RECOMMENDING A SETTING OF AN ADJUSTABLE PARAMETER**

(57) The invention relates to a recommendation method and system for recommending a setting of an adjustable parameter of a device of a facility, depending on an operating state of the facility. Therein, different devices of the facility might be of a different device type, e.g. pumps, valves, motors etc. Each device might have at least one, but typically a plurality of adjustable parameters, each of which can be adjusted to have a desired setting. Such desired setting of the respective adjustable parameter is provided by the recommendation method and system as recommended setting which, in the end, depends on the particular object and device, respectively, and on the considered application and operating state, respectively. The recommender system combines Gaussian processes with representation learning for collaborative filtering via matrix decomposition to come to a suitable recommendation.

## FIG 4

EP 4 092 583 A1

**Description**

The invention relates to a recommendation method and system for recommending a setting or value of an adjustable parameter of an object for an application of the object. For example, the object can be a device of an industrial facility comprising a plurality of devices and the application might correspond to an operating state of the facility. Therein, different devices of the facility might be of a different device type, e.g. pumps, valves, motors etc. Each device might have at least one, but typically a plurality of adjustable parameters, each of which can be adjusted to have a desired setting. Such desired setting of the respective adjustable parameter is provided by the recommendation method and system as recommended setting which, in the end, depends on the particular object and device, respectively, and on the considered application and operating state, respectively.

Specific settings of adjustable parameters of certain objects and for particular applications or situations often requires domain knowledge as well as the consideration of big amounts of data. Moreover, it is often required or at least beneficial if such setting and changes of settings can be performed automatically by a control system. Especially, as a first example, the settings of configuration parameters of devices of an industrial facility depend on the type of the particular device itself and on an actual operating state of the facility. As soon as a new operating state is applied or -even more complicated- when an operating state shows up which is not known from before, e.g. a new error state, the configurations of the devices would have to be adapted. Due to the complexity of such facilities, the decision about which settings have to be applied for which adjustable parameter for which device and in which operating state is a complicated task which has to be addressed automatically to fulfill the requirement of fast and automatic implementation of the settings. As a second example taken from a business environment, customer and product specific adaption of business transactions requires domain knowledge that often involves years of training and experience and knowledge about features of the products dealt with. It becomes even more challenging as the data collected from customers and transactions increase in both quantity and complexity. Currently, decisions about business transactions require extraction and evaluation of known, historic data from source systems. Once these historic data are prepared in a suitable way, new data have to be considered additionally, based on experience and anticipation of future transactions. All this information often has not full transparency and depends on the individual knowledge of a persons involved in such transactions. Moreover, for example pricing decisions usually do not follow any predetermined rules or analytical processes, but are rather based on individual behavior and are therefore not transparently reproduceable.

Often, most of such decisions on identifying optimal settings of devices, on product pricing, and in other related scenarios are made by professionals according to their education, training, and working experiences and by following rule-based guidelines. These sources are prone to become quickly outdated in a dynamic environment. Therefore, it is appealing to provide a decision support system and a recommendation approach, respectively, that is data driven and capable of self-optimizing with increasing data size. Thus, in each one of those examples, a recommender system and method is required which is configured to recommend a suitable setting of the adjustable parameter. For example, a similar system is proposed in EP20167174.

Therefore, a solution is required which serves the need to recommend a setting of an adjustable parameter automatically, accurately, and fast. This is solved by the recommendation method suggested in claim 1, by the recommender system as per claim 12, and by the control unit of claim 13.

A computer implemented recommendation method RM for providing a recommended setting S for a given adjustable parameter PA to be adjusted, comprises a first step SR1 of providing a modeling function DCOM, a second step SR2 of providing a plurality $n$ with $n \geq 2$ of given input variables $VAR_v$ with $v = 1,...,n$ to a prepared or trained, respectively, recommender system RS as an input, and a third step SR3 of processing the input with the provided modeling function DCOM to determine the recommended setting S by the recommender system RS. Therein, different input variables $VAR_v$ correspond to different variable types $VART_v$, for a particular variable type $VART_v$ a plurality $T_v$ of respective variables $VART_{v,t}$ is available with $t = 1,...,T_v$, and for each variable type $VART_v$ only one variable $VART_{v,t}$ is provided as input variable $VAR_v = VART_{v,t}$. The modeling function DCOM is a function trained based on a Gaussian process with $DCOM \sim N(0, K^{coreg} + \sigma^2 I)$ defined by a characterizing covariance matrix $K^{coreg}$ and a corresponding characterizing kernel $k_{SEP}^{coreg}$.

The characterizing kernel $k_{SEP}^{coreg}$ is a separable kernel, being defined by a product $k_{SEP}^{coreg} = \prod_{e=1}^{n} k_e$ of sub-kernels $k_e$.

Each sub-kernel $k_e$ is designed such that it measures the similarity between two variables $VART_{e,t1}$, $VART_{e,t2}$ with $t1, t2 \in [1,..,T_e]$ of the same variable type $VART_e$.

For example, each sub-kernel $k_e$ can based on a Radial Basis Function (RBF).

The recommendation method RM comprises an optional preceding preparation step SP and a subsequent recommendation step SR, wherein the recommendation step SR comprises the first step SR1, the second step SR2, and the third step SR3. The preparation step SP, if executed, performs a training to optimize the modeling function DCOM.

The function DCOM to be provided in the first step SR1 of the recommendation method RM is a Gaussian process based decomposition function which is trained in advance, i.e. before the first step SR1, in the preparation step SP on an n-dimensional settings database SDB. Therein, in the preparation step SP the settings database SDB is provided in a step SP1 containing known and/or assumed settings of the adjustable parameter. Therein, "assumed" settings can be settings which have not been observed or applied, but which can be assumed to be applicable or reasonable for the respective adjustable parameter in the respective scenario. The dimensions $DIM_d$ with $d = 1,...,n$ of the settings database SDB correspond to the variable types $VART_d$, i.e. one dimension $DIM_d$ corresponds to one variable type $VART_d$ while different dimensions $DIM_d$ correspond to different variable tpyes $VART_d$. An iterative optimization of the decomposition function DCOM is performed in a step SP2 of the preparation step SP in a plurality of optimization steps OPTs, preferably by maximizing a log-likelihood with respect to trainable parameters of the decomposition function DCOM.

In each optimization step an initial function $DCOM_{ini}$ is provided, e.g. a default function in the very first optimization step or the resulting function from the preceding optimization step, and parameters defining the provided decomposition function $DCOM_{ini}$ are varied to define an actual decomposition function $DCOM_{act}$. The settings database SDB is decomposed by applying the actual decomposition function $DCOM_{act}$ on the settings database SDB, resulting in a latent representation $LAT_d$ for each variable type $VART_d$ and the latent representations $LAT_d$ are joined to generate a reconstructed settings database SDB_rec, e.g. again utilizing the function $DCOM_{act}$. The reconstructed settings database SDB_rec is compared with the provided settings database SDB, wherein the variation of the parameters of the decomposition function from $DCOM_{ini}$ to $DCOM_{act}$ aims at minimizing the difference between the settings database SDB and the reconstructed settings database SDB_rec.

In a concrete embodiment, a first variable type $VART_1$ corresponds to different operating states OS of an industrial facility, a second variable type $VART_2$ corresponds to different devices DEV of the facility, and in case $n \geq 3$ a third variable type $VART_3$ corresponds to different adjustable parameters PA of the devices DEV of the facility.

In that scenario, the settings database SDB contains known and/or assumed settings S for observed and/or assumed combinations of adjustable parameters *PA,* devices *DEV,* and operating states *OS.* The recommendation method RM provides, upon receipt of input variables $VAR_1 = OS1$, $VAR_2 = DEV1$, $VAR_3 = PA1$, a recommended setting S for a given adjustable parameter *PA*1 for a given device *DEV*1 for a given operating state *OS*1 of the facility.

In a different embodiment a first variable type $VART_1$ corresponds to different customers CST of an industrial product provider, a second variable type $VART_3$ corresponds to different products PRD of the industrial product provider, and in case $n \geq 3$ a third variable type $VART_3$ corresponds to different purchase features PCF for purchasing the products PRD.

In that scenario, the settings database SDB contains known and/or assumed settings S for observed and/or assumed combinations of customers CTS, products PRD, and purchase features PCF. The recommendation method RM provides, upon receipt of input variables $VAR_1 = CST1$, $VAR_2 = PRD1$, $VAR_3 = PCF1$, a recommended setting S for a given purchase feature *PCF1* for a given product *PRD*1 for a given customer *CST*1.

The recommender system for providing a recommended setting S for an parameter PA to be adjusted comprises a computer configured to execute the method sketched above.

A control unit of an industrial facility which facility can be operated in a plurality of operating states OS is configured to control and adjust, respectively, settings S(OS,DEV,PA) of adjustable parameters PA of devices DEV of the facility. The setting S(OS,DEV,PA) of a particular device DEV depends on an actual operating state OS of the facility, and the control unit is configured to execute the recommendation method RM as sketched above to determine a recommended setting S(OS1,DEV1,PA1) upon receipt or provision of given input variables $VAR_1 = OS1$, $VAR_2 = DEV1$, $VAR_3 = PA1$.

Thus, a computer implemented recommendation method RM is suggested for providing a recommended setting S for an adjustable parameter PA, for example to be applied for a device DEV of a facility in a given operating state OS, i.e. the adjustable parameter has a certain value which can be adjusted such that said value corresponds to the recommended setting S. Another application could be the setting or value of a certain purchase feature for a product to be purchased by a customer.

The proposed approach is based on utilization of collaborative filtering with matrix decomposition, sparse variational Gaussian process, and coregionalization. In comparison to conventional matrix and tensor decomposition methods for collaborative filtering, the method proposed herein produces not only a point estimate but also a predictive variance, which indicates the uncertainty of the prediction. This uncertainty information adds more trustworthiness to the data driven solution and enables meaningful interactions between an AI system and the human responsible for the decision-making process. The invention can generate a predictive variance since it models the values in the matrix as a Gaussian distribution which is parameterized by the point estimate as expectation and the predictive variance. Due to the Gaussian process module in the proposed model, the approach is by nature more data efficient than, e.g. multi-way neural networks or other known approaches. In other words, GP needs less training samples since the GP focuses on deriving predictions from similarity between data samples instead of learning a mapping from arbitrary input to output. Furthermore, the proposed model consists of much fewer trainable parameters, resulting in the model being less prone to over-fitting. The data efficiency also originates from the choice of GP regression model.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

DESCRIPTION OF THE FIGURES

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:

FIG 1     shows an industrial facility with a plurality of devices;
FIG 2     shows a settings database SDB;
FIG 3     shows a flow chart of the recommendation method RM in a simple implementation;
FIG 4     shows a different visualization of the flow chart of the recommendation method RM.

DETAILED DESCRIPTION

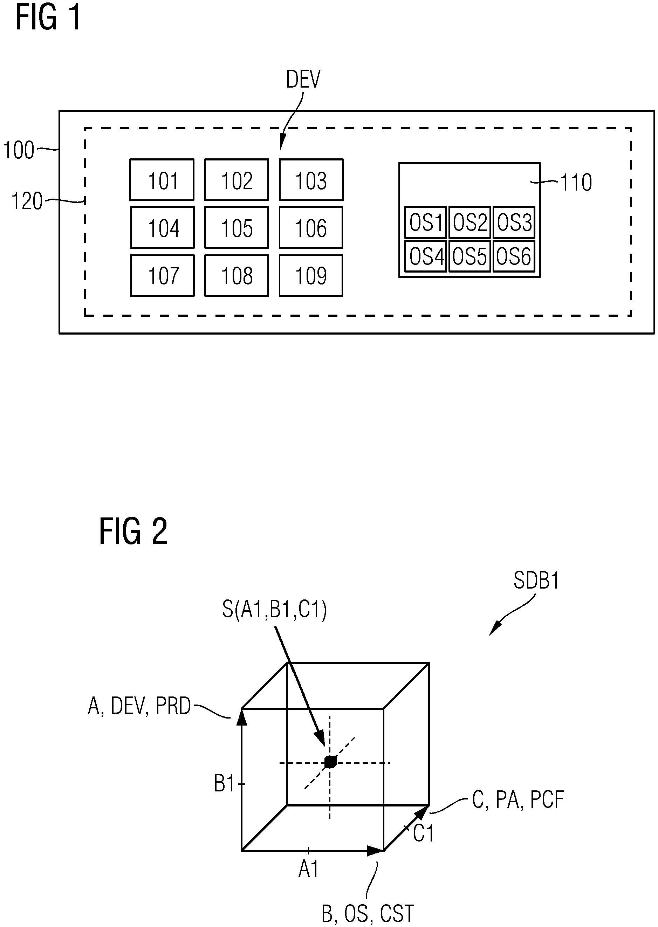

FIG 1 shows a first exemplary embodiment for which the invention might be applied. An industrial facility 100, for example a production facility, comprises a plurality of devices 101-110 which are utilized to produce a product. For example, the devices 101-103 are device controllers, the devices 104-105 are electric motors, the devices 106-107 are pumps, and the devices 108-109 are valves. One 110 of the devices 101-110 can be a central control unit 110 of the facility 100 for controlling the other devices 101-109. Furthermore, the facility 100 comprises a sensor system 120 consisting of a plurality of sensors which are distributed across the facility 100 and the devices 101-109 to observe the facility 100 and its devices 101-109, at least with regard to their actual state of operation and potential error states. The sensors of sensor system 120 are not shown individually, but the sensor system 120 is represented as a whole by a box with dashed lines, surrounding the facility's 100 components. However, it should be clear that the arrangement of components 101-110, 120 in FIG 1 is only a symbolic presentation, but does not represent the realistic arrangement of devices in a facility.

In the following, devices 101-109 are referred to as DEV and DEV1, DEV2,..., as the case may be, to make the explanations more general and independent from the particular realization as motor, pump, valve, controller etc.

The facility 100 can operate in various known operating states OS, for example a first normal operating state OS1, e.g. to produce a first product, a second normal operating state OS2, e.g. to produce a second product, a maintenance state OS3, a shutdown state OS4, a first error condition state OS5, and a second error condition state OS6. The known first and second error conditions OS5, OS6 might differ in the error scenarios, e.g. with regard to particular devices DEV which might be damaged under the error conditions. For example, in the first error condition state OS5 a certain pump 106 of the production facility 100 might be damaged, while in the second error condition state the operation of a particular motor 104 could be erroneous. Additional or alternative operating states might be, for example, "start-up", "high-load", "low-load" state etc. Actually, the concrete selection of operating states is depending on the type of the industrial facility and, again for example, in case the facility is a production facility the selection of suitable operating states OS would be different than in case the industrial facility is a turbine or a magnetic resonance tomograph.

The operating states OS1-OS2 are shown in FIG 1 to be integrated in the central control unit 110 to illustrate that the central control unit 110 can be, but doesn't have to be, configured to observe and/or setup the operating states OS of the facility 100.

Each device DEV can have one or more adjustable parameters PA. For each adjustable parameter PA a corresponding value or setting S is required to operate the respective device DEV wherein such setting S depends on the actual operating state OS of the facility (for the sake of brevity, in the following only the term "setting" will be applied instead of "setting or value".). For example, the adjustable parameter of a device DEV="pump" might be PA="actual rotational speed" and the corresponding setting might be S="1000rpm" in the first normal operating state OS1 while it could be S="0rpm" in the shutdown state OS4 (therein, rpm stands for "revolutions per minute"). Besides the "actual rotational speed", a realistic facility and its devices would have several other adjustable parameters PA to be set for operation of the facility. For example, the adjustable parameters PA might comprise the "actual rotational speed" as a first adjustable parameter PA1, an "on/off" state as a second adjustable parameter PA2, an "actual torque" as a third adjustable parameter PA3, a "maximum rotational speed" as a fourth adjustable parameter PA4, a "maximum operation temperature" as a fifth adjustable parameter PA5, a "minimum power output" as a sixth adjustable parameter PA6, a "maximum power output" as a seventh adjustable parameter PA7, and an "orifice extension" as an eighth adjustable parameter PA8 etc.

It should be clear that the particular selection of devices DEV in the embodiments of the facility 100 is only exemplary and introduced in this limited scope for the sake of brevity of the description. A realistic facility would comprise significantly more devices and a broader bandwidth of device types than introduced above to achieve its technical purpose, e.g. to produce a product or to reasonably operate a turbine or a tomograph. However, the limited scope of introduced devices and device types "motor", "pump", "valve", and "controller" is sufficient to explain the invention and can be scaled up easily to a realistic technical facility by a person skilled in the art without deviating from the invention. In the same way, in a realistic scenario not only one or two error condition states and not only one or two normal operating states etc. might be imaginable, but a much more diversified plurality of operating states OS. The same is applicable for the scope of adjustable parameters PA. All this typically depends on the complexity of the facility 100 and its devices DEV etc. However, the limited scope of introduced operating states OS and adjustable parameters PA is again sufficient to explain the invention and can be scaled up easily to a realistic scenario by a person skilled in the art without deviating from the invention.

As a summary, the industrial facility 100 comprises a plurality of devices DEV and it can be operated under various operating states OS. Each one of the concerned devices DEV has at least one adjustable parameter PA which requires a setting S to operate the respective device DEV. Such setting S for a particular adjustable parameter PA1 of the particular device DEV1 depends on the actual operating state OS of the facility 100.

In case of changing conditions, e.g. a change of the operating state OS, settings S for devices DEV might have to be adapted to the changed scenario. For that purpose, it is beneficial when settings S are recommended by a computer implemented recommender system RS which can be, for example, implemented in and executed by the central control unit 110.

The recommender system RS provides a recommendation for a setting S depending on input variables $VAR_v$ with $v = 1,...,n$. In the embodiment introduced above the input variables for the recommender system RS of the facility 100 are the actual operating state $OS=VAR_1$ as a first dimension, the device $DEV=VAR_2$ for which a setting S of its adjustable parameter $PA=VAR_3$ is required as a second dimension, and the particular adjustable parameter $PA=VAR_3$ for which a setting S is sought as a third dimension. Correspondingly, the input variable space is three-dimensional including $OS=VAR_1$ as a first dimension ranging from OS1 to OSo with o>1, $DEV=VAR_2$ as a second dimension ranging from DEV1 to DEVd with d>1, and $PA=VAR_3$ as a third dimension ranging from PA1 to PAp with p>1. Thus, the first dimension $DIM_1$ corresponds to a first variable type $VART_1$, in this case different operating states OS, the second dimension $DIM_2$ corresponds to a second variable type $VART_2$, in this case different devices DEV, and the third dimension $DIM_3$ corresponds to a third variable type $VART_3$, in this case different adjustable parameters PA of the devices DEV.

Different input variables $VAR_v$ for the recommender system RS correspond to different variable types $VART_v$, wherein one of the variable types, e.g. $VART_1$, might correspond to the operating states OS, another one of the variable types, e.g. $VART_2$, might correspond to devices DEV, and a further one of the variable types, e.g. $VART_3$, might correspond to adjustable parameters PA. For a particular variable type $VART_v$ a plurality $T_v$ of respective variables $VART_{v,t}$ is available with $t = 1,...,T_v$. However, for each variable type $VART_v$ only one variable $VART_{v,t}$ is provided as input variable $VAR_v = VART_{v,t}$.

Just for example, when the recommender system RS receives as input variables $VAR_1, VAR_2, VAR_3$ a particular operating state $VAR_1=OS1$, a particular device $VAR_2=DEV1$, and a particular adjustable parameter $VAR_3=PA1$, e.g. OS1 = "first normal operating state", DEV1 = pump 107, and PA1 = "actual rotational speed", it provides as an output $y(VAR_1, VAR_2, VAR_3)$ the recommended setting $S = y(VAR_1, VAR_2, VAR_3) = $ "1000rpm" for the "actual rotational speed" of DEV1. Still as an example, in case the recommender system RS receives as input variables a particular operating state $VAR_1=OS2$, a particular device $VAR_2=DEV1$, and a particular adjustable parameter $VAR_3=PA1$, e.g. OS2 = "second normal operating state" and DEV1 = pump 108 as well as PA1 = "actual rotational speed" as above, it provides as an output the recommended setting S = "2000rpm" for the "actual rotational speed" of DEV1 in the second normal operating state OS2. In the same way, other combinations of OS, DEV, PA would be characterized by certain settings S.

It should be clear that this is again only exemplary and that additional and/or other input variables than OS, DEV, and/or PA might be selected to be considered by the recommender system RS to provide a recommendation for the setting S of the adjustable parameter PA, depending on the particular application. Therefore, in a more abstract and general view the recommender system RS considers input variables $VAR_1, VAR_2, ..., VAR_n$ to come to a recommendation for the setting S. For example and referring to the embodiment introduced above, input variables $VAR_1$ might represent the operating states OS, input variables $VAR_2$ might represent the devices DEV, and input variables $VAR_3$ might represent

different adjustable parameters PA in case the devices DEV should have more than one adjustable parameter. In this scenario, the input variable space spanned by the variables $VAR_1$, $VAR_2$,... is three-dimensional.

The invention proposes a recommender system RS which is a system trained on known and/or assumed combinations of input variables $VAR_1$, $VAR_2$, ..., $VAR_n$ as introduced above. For certain combinations of variables $VAR_v$ with v=1,...,n, the corresponding settings S are considered to be known, e.g. from history, and/or to be assumable based on experience. Such known data $VAR_1$, $VAR_2$, $VAR_3$, and S from different known scenarios can be utilized to build up a settings database SDB which can have, for example, the form of an n-dimensional tensor with n corresponding to the dimension of the input variable space, i.e. n=3 in this example. This is schematically presented in FIG 2. Thus, the tensor SDB includes a first dimension $VAR_1$, a second dimension $VAR_2$, and a third dimension $VAR_3$ with the first dimension VAR according to all the possible operating states OS, the second dimension $VAR_2$ according to all the devices DEV, and the third dimension $VAR_3$ according to all the devices adjustable parameters PA. Thus, operating states OS1, OS2, ..., OSo are listed along the first dimension $VAR_1$ of the tensor SDB, devices DEV1, DEV2, ..., DEVd are listed along the second dimension $VAR_2$ of the tensor SDB, and adjustable parameters PA1, PA2, ..., PAp are listed along the third dimension $VAR_3$ of the tensor SDB.

Thus, in general terms an entry S at particular coordinates $VAR_1\_0$, $VAR_2\_0$, $VAR_3\_0$ in the tensor SDB represents a previously known or assumed setting $S(VAR_1\_0, VAR_2\_0, VAR_3\_0)$ of the adjustable parameter $VAR_3\_0$ for a particular second variable $VAR_2\_0$ for a particular first variable $VAR_1\_0$. In more concrete words and with regard to the embodiment and to the exemplary situation of pump 107 mentioned above, in case $VAR_1\_0$=OS1 stands for "first normal operating state", $VAR_2\_0$=DEV1 represents pump 107, and $VAR_3\_0$ stands for the adjustable parameter "actual rotational speed", then the entry of the tensor and database SDB at position $\{VAR_1\_0, VAR_2\_0, VAR_3\_0\}$ would be $S(VAR_1\_0, VAR_2\_0, VAR_3\_0)$="1000rpm". Correspondingly, the settings database SDB comprises entries S for all known or assumed combinations of operating states, devices, and adjustable parameters, with each entry S representing a setting of the respective adjustable parameter. However, in a realistic scenario with a typically huge amount of possible operating states, devices, and adjustable parameters and with possibly even more additional dimensions, i.e. n>3, and/or other variables it can be expected that most of the entries S are empty. I.e. the tensor and database SDB, respectively, is large and sparse, because many entries might either not be known or might not make sense because, for example, it would not make sense to assign a setting to an adjustable parameter "actual rotational speed" of a valve or to assign a setting to an adjustable parameter "orifice extension" for a motor.

Nevertheless, the data available in the settings database SDB can be utilized to realize a recommendation method RM for providing a recommended setting S. Before detailing this, a second embodiment and application opportunity, respectively, of the invention shall be described. After that, the recommendation method RM will be illustrated in a general way which is applicable for both the first and the second embodiment as well as for other applications.

As described in more detail above, in the first exemplary embodiment of the invention the entries S in the settings database SDB are values to be applied for adjustable parameters of devices of the facility in certain operating states of the facility. However, it is clear that the invention can be applied in numerous applications besides the one explained in the context of the first exemplary embodiment, concerning the industrial facility. In the second embodiment of the invention, which is again only another example for an application of the invention, the first variable $VAR_1$ can represent a plurality of customers CST of certain products PRD, i.e. $VAR_1$=CST, wherein a plurality of such products PRD is represented by the second variable $VAR_2$, i.e. $VAR_2$=PRD. The third variable $VAR_3$ can represent purchase features PCF, i.e. $VAR_3$=PCF, which describe conditions of a purchase of a product PRD by a customer CST.

I.e. the corresponding tensor and settings database SDB, respectively, would again be three-dimensional (n=3) with the customers CST1, CST2, ..., CSTcmax listed along the first dimension $VAR_1$, the products PRD1, PRD2, ..., PRDrmax listed along the second dimension $VAR_2$, and the purchase features PCF1, PCF2, ..., PCFfmax listed along the third dimension $VAR_3$. A particular entry S (CSTi,PRDj,PCFl) of the tensor SDB with $1 \leq i \leq cmax$, $1 \leq j \leq rmax$, and $1 \leq l \leq fmax$ would describe the setting of the corresponding particular purchase feature PCFl for the corresponding particular product PRDj for the corresponding particular customer CSTi. For example, one of the purchase features PCF might be the final price of a product PRD for a certain customer CST wherein the final price might be differing from the original recommended retail price for that product PRD. I.e. the final price PCFl might be the result of negotiations between the particular customer CSTi and the provider of the product PRDj and might include a corresponding discount. Alternatively, instead of the final price one of the purchase features PCF might represent the achieved discount instead of the final price. Thus, in case the purchase feature PCFl represents such a discount, the particular entry S (CSTi,PRDj,PCFl) represents the discount, e.g. in EUR or USD or in %, granted to customer CSTi for the purchase of the product PRDj. Other purchase features might be, for example, a purchase frequency, an amount of particular purchased products, a time interval of purchases etc.

As a summary of the above, both in the first and in the second embodiment a three-dimensional settings database SDB is available which includes data and settings, respectively, known from experience, from commissioning phases, from earlier deals, from maintenance activities etc. or assumed based on experience. Of course, the database SDB might have more or less dimensions than n=3, depending on the underlying application.

The availability of the respective database SDB in the first and in the second embodiment, respectively, each time allows in a simple approach to recommend a suitable setting S of a certain adjustable parameter $VAR_3\_1=PA$ either for a certain device $VAR_2\_1=DEV$ in a certain operating state $VAR_1\_1=OS$ in the first embodiment or for a certain product $VAR_2\_1=PRD$ for a certain customer $VAR_1\_1=CST$ in the second embodiment, in case such a combination $VAR_1\_1$, $VAR_2\_1$, $VAR_3\_1$ has an entry S ($VAR_1\_1$, $VAR_2\_1$, $VAR_3\_1$) in the settings database SDB. In that situation, the recommendation can simply be the respective entry in the database SDB.

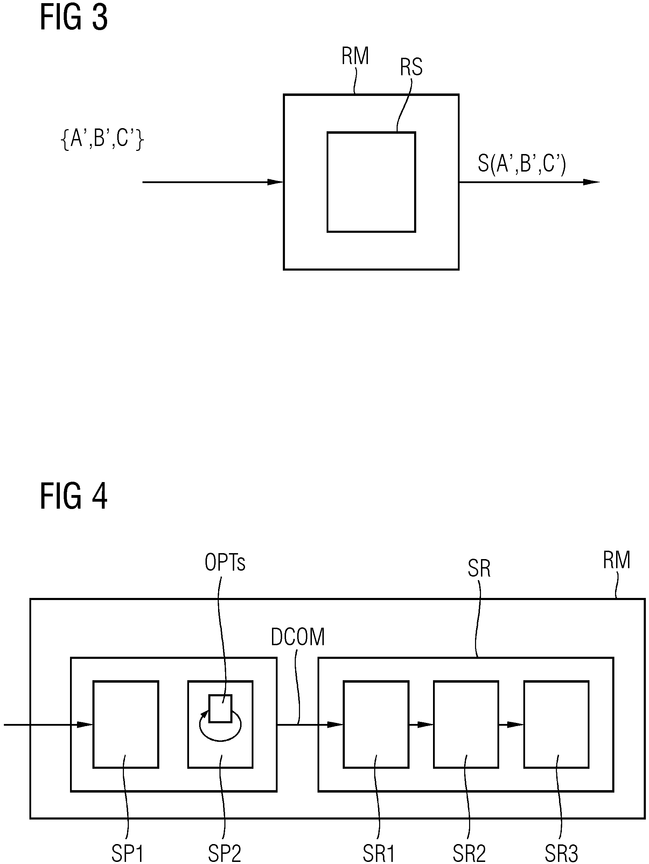

However, in case a setting S of a configuration parameter PA is required for a combination of variables $VAR_1'$, $VAR_2'$, $VAR_3'$ which does not have an entry in the database SDB, the recommendation method RM as depicted in FIG 3 can be applied to recommend such a setting S ($VAR_1'$, $VAR_2'$, $VAR_3'$). Such a situation in which a combination of $VAR_1'$, $VAR_2'$, and $VAR_3'$ is applicable for which the settings database SDB does not have an explicit entry S, might occur simply because that specific combination of $VAR_1'$, $VAR_2'$, and $VAR_3'$ has not yet been implemented. However, that situation might also occur in various scenarios, for example in the first embodiment because a previously unknown operating state OS emerges and/or because a new device DEV has been integrated in the facility 100, and for example in the second embodiment because a new customer CST wants to purchase a product PRD or because a new product PRD is offered which has not been available before.

The recommendation method RM applies a recommender system RS which is a system which has been trained based on the knowledge from the settings database SDB as described below. Therewith, the recommender system RS is configured and trained to provide as an output a suitable setting S ($VAR_1'$, $VAR_2'$, $VAR_3'$) as a reply to an input {$VAR_1'$, $VAR_2'$, $VAR_3'$}, even in case such combination $VAR_1'$, $VAR_2'$, $VAR_3'$ is not known and does not have an entry in the settings database SDB.

The invention is based on the concept to model the settings database SDB utilizing the approach of Gaussian processes. Therein, it is proposed to combine Gaussian processes with representation learning for collaborative filtering via matrix decomposition. In the following, basic concepts of collaborative filtering and Gaussian processes will be addressed before the recommendation method RM itself will be introduced.

Collaborative filtering provides a powerful solution to recommender systems. For example, recommending a setting for an adjustable parameter for a device and for a certain operating state is based on the assumption that similar devices or devices of similar device type, respectively, require similar settings of their adjustable parameters in similar operating states. A database describing such interactions between devices, operating states, adjustable parameters etc. often takes the form of a matrix or a tensor as described above (SDB), where each entry S describes the interaction between one operating state, one device, and one adjustable parameter, wherein, in this example, the interaction is expressed as the setting S. The overall pattern of an operating state can therefore be described by the corresponding row in such a matrix or tensor. However, since there are typically large numbers of operating states, devices, and adjustable parameters in the database, i.e. a large number of variables $VAR_1, VAR_2, VAR_3,...,$ and for each variable $VAR_v$ with v=1,...,n usually only a small subset of the other variables is applicable, the tensor is often large and sparse. Therefore, it is advantageous to derive abstract feature vectors to represent the variables. This understanding inspired a wide variety of low-rank matrix decomposition models such as non-negative matrix decomposition, biased matrix decomposition, and non-parametric decomposition. These methods aim at learning low dimensional representations for all variables, allowing for the prediction of the unobserved interaction between a new combination of variables. The high dimensionality and sparsity of the observed data become even more challenging with the number of variables $VAR_v$, i.e. if the observed data are represented by a tensor with more than two dimensions. Such tensors are often used to describe the adjacency of entities in a knowledge graph, or different aspects of an interaction between two or more variables. In order to predict the existence of an unobserved entry, scalable tensor decomposition methods have been proposed, including "RESCAL", "TransE", and multi-way neural networks. These tensor decomposition methods, originally designed for sparse 3-way tensors, can be also adapted to 2-way matrix cases, which enables building large recommender systems, as well as to model non-linear interactions.

Gaussian processes belong to a class of models that can generate uncertainty prediction along with point estimates via its kernel function, which measures the similarity between data samples. Gaussian processes can be applied to perform probabilistic matrix decomposition, also resulting in dimensionality reduction, e.g. via the "Gaussian Process Latent Variable Model" (GPLVM). Here, a Gaussian process is used as a prior distribution for a function that maps a low-dimensional latent space to the high-dimensional data matrix. The individual components of this mapping function are modelled as independent draws from a Gaussian process, assuming all dimensions of the data matrix are independent. This independence assumption might be problematic in the context of collaborative filtering, where modelling the interdependency of both users and items is considered beneficial. While GPLVM has been used as matrix factorization method for collaborative filtering in the past, as for other matrix decomposition approaches, practical applicability can be limited also for computational reasons. Being designed primarily as a dimensionality reduction method for data with few missing values, it is not amenable to the triple-based learning paradigm that facilitates efficient modeling of large and highly sparse datasets and typically requires storing the dense data matrix in memory.

However, coming back to the concrete invention, the recommendation method RM combines Gaussian processes with representation learning for collaborative filtering via matrix decomposition as mentioned above. The method RM intrinsically includes learning of a latent representation vector for each entity type, i.e. in the given embodiment operating states, devices, and adjustable parameters, jointly with a multi-output Gaussian process that predicts not only a point estimate, i.e. the recommended setting S, but also its predictive variance, i.e. the certainty or reliability of the recommendation. This design is furtheron motivated by connections to coregionalization with separable kernels in Gaussian processes as well as to the GPLVM.

For the sake of brevity and in order to reduce complexity, it is assumed in the following that the input variable space is only two-dimensional, i.e. n=2, including only $VAR_1$ and $VAR_2$ as input variables. This is other than in the embodiments introduced above which included a three-dimensional input data space $VAR_1$, $VAR_2$, $VAR_3$, namely operating states OS=$VAR_1$, devices DEV=$VAR_2$, adjustable parameters PA=$VAR_3$ in the first embodiment and customers CST=$VAR_1$, products PRD=$VAR_2$, purchase features PCF=$VAR_3$ in the second embodiment. In the concrete embodiment introduced above the two-dimensionality could be interpreted such that, for example, each device has only one adjustable parameter so that it would not be required to provide the adjustable parameter as an input variable to the recommender system RS and recommendation method RM, respectively.

In any case, the proposed approach for recommending a setting S for an adjustable parameter PA as introduced below is scalable and can be varied from the exemplary two-dimensional input variable space to any n-dimensional input variable space with n>1.

Again referring to collaborative filtering and now assuming the two-dimensional input variable space with variables $VAR_1$, $VAR_2$, a dataset often takes the form of a matrix Y in $\mathbb{R}^{IV1 \times JV2}$' assuming $IV1$ different variables $VAR_1$, e.g. different operating states OSi with i=1,..., $IV1$, and $JV2$ different variables $VAR_2$, e.g. different devices DEVj with j=1,...,$JV2$. Each entry S ($VAR_1$_i, $VAR_2$_j), e.g. representing a setting S(OSi,DEVj) of an adjustable parameter for particular device DEVj for particular operating state OSi, describes the interaction between variable $VAR_1$_i and variable $VAR_2$_j. Such a matrix Y is typically large and sparse as mentioned above.

In order to derive a new recommendation for a combination of variables $VAR_1$', $VAR_2$' which has not been observed before and/or for which no interaction has taken place yet, i.e. for which no entry S exists in the matrix Y, such entry has to be predicted and collaborative filtering is a suitable approach to such prediction. A solution to this collaborative filtering task is based on a matrix decomposition approach.

During training, one fits a decomposition model function DCOM that can recover all known entries S in the matrix **Y** to a certain extent, i.e. the training process includes an iterative optimization of model parameters defining the decomposition model DCOM until such recovering is achieved. Such training process itself is generally known and shall not be addressed herein. Instead, the invention concerns the function to be trained, i.e. the decomposition model DCOM.

As a simple, general illustration, the matrix Y can be modeled as $Y \approx AB^T$, with $A \in \mathcal{A} = \mathbb{R}^{IV1 \times r}$ and

$$B \in \mathcal{B} = \mathbb{R}^{JV2 \times r}$$

with r being the rank of the matrix Y. Equivalently, this can be expressed as $y(i,j) = a_i^T b_j$ for all $(i,j) \in [1, IV1] \times [1,JV2]$. Therein, $a_i$ and $b_j$ denote the i-th and j-th row in $A$ and $B$, respectively.

At inference time, any entry value that is not available in the training data, i.e. in SDB, can be predicted by reading the corresponding location from a reconstructed matrix $\hat{Y} = AB^T$. The generalization power of the decomposition model DCOM lies in the low-rank matrices $A$ and $B$ applied for the reconstruction of $\hat{Y}$, wherein the factor matrices $A$ and $B$ can be interpreted as latent representations of the variables $VAR_1$, $VAR_2$.

In order to optimize the modeling performance for decomposing $Y$, it is possible to apply more complex functions $g$ with the decomposition model DCOM than, for example, the dot product to join the latent representations. Expressing the model definition as $y(i,j) = g(a_i, b_j)$ for all $(i,j) \in [1,IV1] \times [1,JV2]$, the function $g$ can be realized in various ways, depending on the decomposition approach, e.g. via singular value decomposition, biased matrix decomposition, multiway neural networks, or GPLVM.

GPLVM, for example described in "Gaussian process latent variable models for visualisation of high dimensional data" by N.D. Lawrence in "Advances in neural information processing systems", pp. 329-336, 2004, and in "Learning for larger datasets with the gaussian process latent variable model" by N.D. Lawrence in "Artificial Intelligence and Statistics", pp. 243-250, 2007, solves the matrix decomposition task by fitting JV2 independent GP regression models on unobserved latent variables $x_i$ with

$$p(y_{*,j}) =$$

$$\mathcal{N}(y_{*,j}|0, K_j + \sigma^2 I).$$

Therein, $y_{*,j}$ stands for the j-th column of $Y$ and covariance matrix $K_j \in \mathbb{R}^{IV1 \times IV1}$ captures the covariances between each pair of latent representations $(a_i, a_i')$ defined by the covariance function or kernel $k(a_i, a_i')$. Such kernel function $k(a_i, a_i')$ is the kernel function applied on two rows in $A$ and it quantifies the similarity between the two rows. In the same way, kernel function $k(b_j, b_j')$ would be the kernel function applied on two rows in $B$.

In other words, the GPLVM can be interpreted as a multiple-output GP regression model where only the output data are given and the unobserved inputs are being optimized.

In general, GPLVM treats all output dimensions in the matrix $Y$ as independent. This is an assumption that may not always hold in a realistic scenario, e.g. the adjustable parameters of the devices could be correlated. To capture such dependencies between output dimensions, the invention proposes a new coregionalization kernel $k$ to perform multi-output Gaussian Process regression for unsupervised matrix decomposition in the spirit of the GPLVM.

The proposed kernel $k$ is separable and can be written as the product of two individual kernels $k^A$ and $k^B$. Correspondingly, the proposed kernel and the corresponding covariance matrix can be written as

$$K^{coreg} = K^{\mathcal{A}} \otimes K^B \text{ with } K_{i,i'}^{\mathcal{A}} = k^{\mathcal{A}}(a_i, a_i') = k_A(i, i') \text{ and }$$

$$K_{j,j'}^{\mathcal{B}} = k^{\mathcal{B}}(b_j, b_j') = k_B(j, j').$$

For the sake of symmetry, the same covariance function is chosen for $k^A$ and $k^B$, e.g. based on the known "Radial Basis Function" (RBF). As for matrix $k^A$, each element in $k^B$ measures the similarity between a pair of output dimensions (or devices) $(b_j, b_j')$. As the terms $k_A(i,i')$ and $k_B(j,j')$ of the equations above imply, the latent variables in matrices $A$ and $B$ can be treated as hyper parameters in a specific kernel that takes as input the indices. From a functional perspective, the proposed kernel $k^{coreg}((i,j), (i',j')) = k_A(i, i') \cdot k_B(j,j')$ measures the similarity between pairs of $a$ and $b$, i.e. $(a_i, b_j)$ (or (i,j)) and $(a_i', b_j')$ (or (i',j')), i.e. pairs of first and second variables $VAR_1$, $VAR_2$. The measurement is performed out by evaluating the two kernel functions $k_A$, $k_B$ at (i,i') and (j,j'), respectively, and calculating the product of both kernel values. The training samples can be thus formulated using only the indices and corresponding entries in the matrix, i.e. $(i,j,y_{i,j})$ for all $i,j \in [1, IV1] \times [1, JV2]$. With such "triple" formulation, the approach achieves much higher computational efficiency compared to other uncertainty-aware matrix decomposition methods such as GPLVM. The input to the model takes the form of the indices $(i,j)$ and the training target is a scalar $y_{i,j}$, in case of matrix decomposition. The GPLVM, on the other hand, always attempts to predict the entire row in the matrix $Y$ from the entire latent vector $a_i$. This can be a severe issue if the matrix to be decomposed is large, which might not always fit into the computer memory. Thus, this "triple" data format is especially advantageous in case of large number of items and high sparsity in matrix $Y$ since it does not require storing the data in dense matrix format.

Eventually, the decomposition model DCOM can be written as $DCOM \sim N(0, K^{coreg} + \sigma^2 I)$ with $DCOM \in \mathbb{R}^{IV1 \cdot JV2}$, $K^{coreg} \in \mathbb{R}^{(IV1 \cdot JV2) \times (IV1 \cdot JV2)}$. The vector $DCOM$ has a length of $IV1 \cdot JV2$, indicating that it consists of the outcome of all possible combinations of $IV1$ first variables $VAR_1$, e.g. different operating states, and $JV2$ second variables $VAR_2$, e.g. devices.

In a different perspective, the proposed kernel $k$ is still separable and can be written as the product of two individual kernels. Here the first kernel measures similarity of samples in the input space and the second kernel captures the similarity between each pair of output dimensions. More formally, this kernel and covariance matrix, respectively, takes the form $(K)_{j,j'} = k^A(a_i, a_i') k^W(b_j, b_j')$ or equivalently, $K = k^A(a_i, a_i') W$. Therein, $k^A$ and $k^W$ are scalar kernels on $A \times A$ and $[1,...,JV2] \times [1,...,JV2]$, respectively, and $W_{i,j} = k^W(i,j)$ is a symmetric and positive semi-definite matrix, which models the dependency between each pair of outputs. While coregionalization is usually performed in the context of supervised regression, the inputs $a_i$ are unobserved in the approach proposed herein and, as for the GPLVM model, need to be optimized. $W$ being the identity matrix implies independence between outputs and the model falls back to the standard GPLVM. There is a variety of approaches for choosing $W$, ranging from the design of a symmetric and positive semi-definite matrix based on suitable regularizers to the choice of covariance functions for the different output components. However, herein it is chosen to replace the coregionalization matrix $W$ by a kernel on latent representations of variables $VAR_2$ in vector space $B$, such that the covariance matrix can be written as a Kronecker product of the covariance matrix of the latent variables representing the second variable $K^B$ and the covariance matrix of the latent variables representing the first variable $K^A$. Thereby representation learning is combined with coregionalization in multi-output GPs for collaborative filtering via unsupervised matrix factorization.

In summary, the model proposed herein performs a sparse matrix decomposition, where the representation vectors of the first variable $VAR_1$ and the second variable $VAR_2$ are consumed by a GP regression with specifically designed kernel. The kernel measures the similarity between two pairs of the first and the second variable $VAR_1$, $VAR_2$ in form of $(i,j)$ and $(i',j')$. At inference, the model generates a Gaussian distribution the mean of which serves as point estimate, therewith representing the aspired recommended setting, and the variance of which serves as corresponding prediction uncertainty.

Coming back to the first embodiment, the recommendation method RM and system RS can be implemented in the central control unit 110 of the facility 100. Thus, the central control unit 110 is configured to process an actual operating state OSact of the facility 100 to select an optimal setting S o each adjustable parameter PA of each device DEV of the facility. The actual operating state OSact can either be selected manually by an operator of the facility 100 or it can be determined automatically by the central control unit 110. The automatic determination of the actual operating state OSact can either be based on a regular schedule of the facility 100, e.g. in case a first product has to be produced in a first time span and a second product, requiring a different operating state, shall be produced in a subsequent time span, or it can be determined based on an regular, ongoing observation of the facility 100. Such observation can utilize data of sensors which might be distributed across the facility 100 wherein such sensor data might give insights the actual states of the devices DEV, into the overall status of the facility 100 etc. Especially, the sensors would be configured and arranged to detect an error state of the facility 100 so that the central control unit 110 can trigger and implement a suitable operating state OSact upon detection of such an error state. However, the central control unit 110 is configured to process the actual operating state OSact of the facility 100 to select an optimal setting S of each adjustable parameter PA1,...PAp of each device DEV DEV1,...DEVd of the facility. This happens by providing the triplet consisting of OSact, PAi, DEVj with i=1,...,p and j=1,...,d for each I and each j to the recommender system RS. Upon receipt, the recommender system RS provides recommended settings S(OSact,PAi,DEVj) utilizing the recommendation method RM which has been trained as described above. In a possible embodiment, the recommended settings S are then implemented on the concerned devices DEVi by the central control unit 110 which has, at least for this purpose, full control over those devices DEVi of the facility 100.

FIG 4 shows another visualization of the recommendation method RM. The method RM is composed of a recommendation step SR and an optional preparation step SP, preceding the recommendation step SR. Therein, the preparation step SP is "optional" in so far as that the training procedure of the function DCOM, which is the subject of the preparation step SP, does not necessarily have to be executed each and every time the recommendation method RM is applied, but only, for example, when the settings database SDB is extended by additional data. However, the recommendation step SR comprises a step SR1 of providing a modeling function DCOM, e.g. received from the preparation step SP, a step SR2 of providing a plurality $n$ with $n \geq 2$ of given input variables $VAR_v$ with $v = 1,...,n$ the recommender system RS as an input, and a step SR3 of processing the input with the provided modeling function DCOM to determine the recommended setting S.

The preparation step SP, if executed, performs the training to optimize the modeling function DCOM to be provided in the first step SR1 of the recommendation method RM. As mentioned, DCOM is a Gaussian process based decomposition function which is trained in advance, i.e. before the first step SR1, in the preparation step SP on the n-dimensional settings database SDB. In the preparation step SP the settings database SDB is provided in a step SP1. An iterative optimization of the decomposition function DCOM is performed in a step SP2 in a plurality of optimization steps OPTs, preferably by maximizing a log-likelihood with respect to trainable parameters of the decomposition function DCOM. In each optimization step OPTs, an initial function $DCOM_{ini}$ is provided, e.g. a default function in the very first optimization step or the resulting function from the preceding optimization step, and parameters defining the provided decomposition function $DCOM_{ini}$ are varied to define an actual decomposition function $DCOM_{act}$. The settings database SDB is decomposed by applying the actual decomposition function $DCOM_{act}$ on the settings database SDB, resulting in a latent representation $LAT_d$ for each variable type $VART_d$. The latent representations $LAT_d$ are joined to generate a reconstructed settings database SDB_rec, the reconstructed settings database SDB_rec is compared with the provided settings database SDB, wherein the variation of the parameters of the decomposition function from $DCOM_{ini}$ to $DCOM_{act}$ aims at minimizing the difference between the settings database SDB and the reconstructed settings database SDB_rec. As soon as the difference falls below a targeted threshold or achieves a saturation, the optimization procedure is ended and the then actual decomposition function $DCOM_{act}$ is provided to the recommendation step RS.

However, coming back to vector **DCOM** and its typically remarkable length of **IV1·JV2,** fitting such a model can be challenging in practice due to the size of the covariance matrix $K^{coreg} \in \mathbb{R}^{(IV1 \cdot JV2) \times (IV1 \cdot JV2)}$ since there are typically large numbers of first and second variables $VAR_1$, $VAR_2$. Computing the inverse of the covariance matrix, which is required for computing the log marginal likelihood, has a complexity of $\mathcal{O}(num)$ where **num** is the number of training samples, i.e. **num =IV1·JV2** in the example introduced herein. This challenge can be addressed via sparse GP approaches. A sparse GP model introduces **m << num** so called inducing points, denoted as $Z_m$ that represent the entire dataset.

Such inducing points are optimized as additional parameters in a GP model. For example, "Sparse Pseudo-input Gaussian Process" (SPGP) as introduced in "Sparse gaussian processes using pseudo-inputs" E. Snelson et al. in "Advances in neural information processing systems", pp. 1257-1264, 2006, proposes to treat them as pseudo-inputs, i.e. parameters in the kernel definition, in a similar fashion as the index kernels $k_A$ and $k_B$ are defined herein. On the other hand, the "Sparse Variational Gaussian Process" model (SVGP) as introduced by M. Titsias in "Variational learning of inducing variables in sparse gaussian processes" in "Artificial Intelligence and Statistics", pp. 567-574, 2009, augments the model with inducing variables **u** with a Gaussian prior **p(u)** that contains the values of a function f, e.g. DCOM, at inducing points $Z_m$. With this augmentation, a variational lower bound of the marginal log likelihood can be derived:

$$\log p(y) \leq \log \mathcal{N} \left(y | K_{num,m} \ K_{m,m}^{-1} \mu, \sigma^2 I\right)$$

$$-\frac{1}{2\sigma^2} tr\left(K_{num,m} \ K_{m,m}^{-1} \Sigma \ K_{m,m}^{-1} \ K_{m,num}\right)$$

$$-\frac{1}{2\sigma^2} tr\left(K_{num,num} - Q_{num,num}\right) - KL(q(u)||p(u))$$

Therein, **q(u)** is the variational posterior on the inducing variables **u** and $Q_{num,num} = K_{num,m} \ K_{m,m}^{-1} \ K_{m,num}$. $K_{m,m}$ is the covariance function evaluated between all the inducing points and $K_{num,m}$ is the covariance function between all inducing points and training points.

The essential motivation of applying inducing points is to avoid calculating and inverting the full covariance matrix **K** in $\mathbb{R}^{num \times num}$. Instead, one only calculates the kernel between a training sample and all inducing points as in Kmn, and the kernel between two inducing points as in $K_{numm,m}$, which is defined as $K_{m,m} = K(A_m, A_m) \otimes K(B_m, B_m) \in \mathbb{R}^{(m_A \ m_B) \times (m_A \ m_B)}$ in the specific case of coregionalization.

Therefore, SVGP reduces the computation complexity from $O((IV1 \cdot JV2)^3)$ to $O((IV1 \cdot JV2) \cdot (m_A \cdot m_B)^2)$. The triple-based formulation $(i,j, y_{i,j})$ introduced above means that the set of training samples consists only of observed triples. By making use of the SVGP approximation, it is only required to compute the kernel between such a training sample and all inducing points or between pairs of inducing points. This in turn means that for matrices with a sparsity SPR, which is the fraction of observed interactions between first and second variables $VAR_1$, $VAR_2$, the computational complexity reduces to $O(SPR \cdot (IV1 \cdot JV2) \cdot (m_A \cdot m_B)^2)$.

In practice, the computational complexity can be further reduced if the same number of inducing points **m** is chosen in **A** and **B.** This allows to learn coupled pairs of inducing points in both spaces. By tying the parameters of both sets of latent representations, the effective size of $K_{m,m}$ can be reduced to $m \times m$ and further reduce computational complexity to $O(SPR \cdot (IV1 \cdot JV2) \cdot m^2)$.

The proposed method is not limited to collaborative filtering in two-dimensional matrices, e.g. comprising the first and the second variable $VAR_1$, $VAR_2$. It can be easily extended to perform tensor completion tasks for an n-dimensional tensor with n>2. For example, in case of n=3, representing a three-dimensional input variable space with first, second, and third variable $VAR_1$, $VAR_2$, $VAR_3$, the target tensor is $Y \in \mathbb{R}^{IV1 \times JV2 \times LV3}$ and its entries describe the interactions among three types of entities $VAR_1$, $VAR_2$, $VAR_3$, e.g. $VAR_1$ representing different operating states OS, $VAR_2$ representing different devices DEV, and $VAR_3$ representing different adjustable parameters PA. In this application, the "interactions" would again be the settings S for the respective adjustable parameters. Alternatively, the tensor could be an adjacency tensor that represents a knowledge graph, where the first and second dimensions represent all entities, and the third dimension represents multiple types of relations between entities.

In such data situations, the training samples become $(i,j,l, y_{i,j,l})$ and correspondingly, the coregionalization kernel becomes $k^{coreg}((i,j,l), (i',j',l')) = k_A(i,i') \cdot k_B(j,j') \cdot k_C(l,l')$ by introducing one more kernel $k_C$ defined in the third dimension with hyper parameter C, which contains the latent representations of the third dimension, e.g. the adjustable parameters PA. Even more general and considering an arbitrary number of dimensions n, the separable kernel is defined by a product $k^{coreg} = \prod_{e=1}^{n} k_e$ of sub-kernels $k_e$, wherein each sub-kernel $k_e$ is designed such that it measures the similarity between two variables $VART_{e,t1}$, $VART_{e,t2}$ with $t1,t2 \in [1,...,T_e]$ of the same variable type $VART_e$.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description. Thus, the invention is not restricted to the above illustrated embodiments but variations can be derived by a person skilled in the art without deviation from the scope of the invention.

**Claims**

1. A computer implemented recommendation method RM for providing a recommended setting S for a given parameter PA to be adjusted, wherein

   - in a first step SR1, a modeling function DCOM is provided,
   - in a second step SR2, a plurality $n$ with $n \geq 2$ of given input variables $VAR_v$ with $v = 1,...,n$ is provided to a prepared recommender system RS as an input, wherein

     -- different input variables $VAR_v$ correspond to different variable types $VART_v$,
     -- for a particular variable type $VART_v$ a plurality $T_v$ of respective variables $VART_{v,t}$ is available with $t = 1,...,T_v$,
     -- for each variable type $VART_v$ only one variable $VART_{v,t}$ is provided as input variable $VAR_v = VART_{v,t}$

   - in a third step SR3, the recommender system RS processes the input with the provided modeling function DCOM to determine the recommended setting S,
   wherein
   - the modeling function DCOM is a function trained based on a Gaussian process with $DCOM \sim N(0, K^{coreg} + \sigma^2 I)$ defined by a characterizing covariance matrix $K^{coreg}$ and a corresponding characterizing kernel $k_{SEP}^{coreg}$.

2. Method according to claim 1, wherein the characterizing kernel $k_{SEP}^{coreg}$ is a separable kernel, being defined by a product $k_{SEP}^{coreg} = \prod_{e=1}^{n} k_e$ of sub-kernels $k_e$.

3. Method according to claim 2, wherein each sub-kernel $k_e$ is designed such that it measures the similarity between two variables $VART_{e,t1}$, $VART_{e,t2}$ with $t1,t2 \in [1,...,T_e]$ of the same variable type $VART_e$.

4. Method according to any one of claims 2 to 3, wherein each sub-kernel is based on a Radial Basis Function (RBF).

5. Method according to any one of claims 1 to 4, wherein the recommendation method RM comprises an optional preceding preparation step SP and a subsequent recommendation step SR, wherein

- the recommendation step SR comprises the first step SR1, the second step SR2, and the third step SR3,
- the preparation step SP, if executed, performs a training to optimize the modeling function DCOM.

6. Method according to claim 5, wherein the function DCOM to be provided in the first step SR1 of the recommendation method RM is a Gaussian process based decomposition function which is trained in a preparation step SP on an n-dimensional settings database SDB, wherein in the preparation step SP

- the settings database SDB is provided in a step SP1 containing known and/or assumed settings of the adjustable parameter, wherein the dimensions $DIM_d$ with $d = 1,...,n$ of the settings database SDB corresponds to the variable types $VART_d$,
- an iterative optimization of the decomposition function DCOM is performed in a step SP2 in a plurality of optimization steps OPTs, preferably by maximizing a log-likelihood with respect to trainable parameters of the decomposition function DCOM.

7. Method according to claim 6, wherein in each optimization step

- an initial function $DCOM_{ini}$ is provided,
- parameters defining the provided decomposition function $DCOM_{ini}$ are varied to define an actual decomposition function $DCOM_{act}$,
- the settings database SDB is decomposed by applying the actual decomposition function $DCOM_{act}$ on the settings database SDB, resulting in a latent representation $LAT_d$ for each variable type $VART_d$,
- the latent representations $LAT_d$ are joined to generate a reconstructed settings database SDB_rec,
- the reconstructed settings database SDB_rec is compared with the provided settings database SDB,

wherein the variation of the parameters of the decomposition function from $DCOM_{ini}$ to $DCOM_{act}$ aims at minimizing the difference between the settings database SDB and the reconstructed settings database SDB_rec.

8. Method according to any one of claims 1 to 7, wherein

- a first variable type $VART_1$ corresponds to different operating states OS of an industrial facility (100),
- a second variable type $VART_3$ corresponds to different devices DEV of the facility (100), and
- in case n≥3 a third variable type $VART_3$ corresponds to different adjustable parameters PA of the devices DEV of the facility (100).

9. Method according to claim 8, wherein

- the settings database SDB contains known and/or assumed settings S for observed and/or assumed combinations of adjustable parameters $PA$, devices $DEV$, and operating states $OS$,
- the recommendation method RM provides, upon receipt of input variables $VAR_1 = OS1$, $VAR_2 = DEV1$, $VAR_3 = PA1$, a recommended setting S for a given adjustable parameter $PA1$ for a given device $DEV1$ for a given operating state $OS1$ of the facility (100).

10. Method according to any one of claims 1 to 7, wherein

- a first variable type $VART_1$ corresponds to different customers CST of an industrial product provider,
- a second variable type $VART_3$ corresponds to different products PRD of the industrial product provider, and
- in case n≥3 a third variable type $VART_3$ corresponds to different purchase features PCF for purchasing the products PRD.

11. Method according to claim 10, wherein

- the settings database SDB contains known and/or assumed settings S for observed and/or assumed combinations of customers CTS, products PRD, and purchase features PCF,
- the recommendation method RM provides, upon receipt of input variables $VAR_1 = CST1$, $VAR_2 = PRD1$, $VAR_3 = PCF1$, a recommended setting S for a given purchase feature $PCF1$ for a given product $PRD1$ for a given customer $CST1$.

12. Recommender system RS for providing a recommended setting S for an parameter PA to be adjusted, comprising a computer configured to execute the method according to any one of claims 1 to 11.

13. Control unit (110) of a facility (100), wherein

- the facility (100) can be operated in a plurality of operating states OS,
- the control unit (110) is configured to control settings S(OS,DEV,PA) of adjustable parameters PA of devices DEV of the facility (100), wherein the setting S(OS,DEV,PA) of a particular device DEV depends on an actual operating state OS of the facility (100), and
- the control unit (110) is configured to execute the recommendation method RM according to any one of claims 1 to 11 to determine a recommended setting S(OS1,DEV1,PA1) upon receipt or provision of given input variables $VAR_1 = OS1$, $VAR_2 = DEV1$, $VAR_3 = PA1$.

FIG 1

DEV

100

120

| 101 | 102 | 103 |
| 104 | 105 | 106 |
| 107 | 108 | 109 |

110

| OS1 | OS2 | OS3 |
| OS4 | OS5 | OS6 |

FIG 2

SDB1

S(A1,B1,C1)

A, DEV, PRD

B1

C, PA, PCF

C1

A1

B, OS, CST

# FIG 3

# FIG 4

Europäisches
Patentamt

European
Patent Office

Office européen
des brevets

# EUROPEAN SEARCH REPORT

Application Number

EP 21 17 4414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MUSTANSAR ALI GHAZANFAR ET AL: "Kernel-Mapping Recommender system algorithms", INFORMATION SCIENCES, ELSEVIER, AMSTERDAM, NL, vol. 208, 4 April 2012 (2012-04-04), pages 81-104, XP028514633, ISSN: 0020-0255, DOI: 10.1016/J.INS.2012.04.012 [retrieved on 2012-05-05] | 1-6,12, 13 | INV. G06N7/00 G05B13/02 G06N20/10 |
| A | * the whole document * | 7-11 | |
| X | WO 2020/032947 A1 (SIEMENS AG [DE]; SIEMENS CORP [US]) 13 February 2020 (2020-02-13) | 1,7-13 | |
| A | * paragraph [0001] * <br> * paragraph [0017] * <br> * paragraph [0029] * <br> * paragraph [0033] - paragraph [0034] * <br> * paragraph [0036] * <br> * paragraph [0041] * <br> * paragraph [0057] * <br> * paragraph [0060] * | 2-6 | |
| X | ZHENWEN DAI ET AL: "Efficient Modeling of Latent Information in Supervised Learning using Gaussian Processes", ARXIV.ORG, CORNELL UNIVERSITY LIBRARY, 201 OLIN LIBRARY CORNELL UNIVERSITY ITHACA, NY 14853, 27 May 2017 (2017-05-27), XP080950434, | 1,4,12, 13 | |
| A | * the whole document * | 2,3,5-11 | |

TECHNICAL FIELDS
SEARCHED (IPC)

G06N
G05B

-/--

The present search report has been drawn up for all claims

| Place of search | Date of completion of the search | Examiner |
|---|---|---|
| Munich | 12 November 2021 | Cyranka, Oliver |

EPO FORM 1503 03.82 (P04C01)

Europäisches
Patentamt

European
Patent Office

Office européen
des brevets

**EUROPEAN SEARCH REPORT**

Application Number

EP 21 17 4414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 3 889 840 A1 (SIEMENS AG [DE]) 6 October 2021 (2021-10-06) * paragraph [0001] * * paragraph [0004] - paragraph [0010] * * paragraph [0028] * * paragraph [0031] - paragraph [0044]; figure 1 * * paragraph [0080] - paragraph [0081] * ----- | 1-13 | |

TECHNICAL FIELDS
SEARCHED        (IPC)

The present search report has been drawn up for all claims

| Place of search | Date of completion of the search | Examiner |
|---|---|---|
| Munich | 12 November 2021 | Cyranka, Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 17 4414

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2021

| Patent document cited in search report | | Publication date | Patent family member(s) | | Publication date |
|---|---|---|---|---|---|
| WO 2020032947 | A1 | 13-02-2020 | US | 2021247744 A1 | 12-08-2021 |
| | | | WO | 2020032947 A1 | 13-02-2020 |
| EP 3889840 | A1 | 06-10-2021 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20167174 A

**Non-patent literature cited in the description**

- **N.D. LAWRENCE.** Gaussian process latent variable models for visualisation of high dimensional data. *Advances in neural information processing systems,* 2004, 329-336
- **N.D. LAWRENCE.** Learning for larger datasets with the gaussian process latent variable model. *Artificial Intelligence and Statistics,* 2007, 243-250
- **E. SNELSON et al.** Sparse gaussian processes using pseudo-inputs. *Advances in neural information processing systems,* 2006, 1257-1264
- **M. TITSIAS.** Sparse Variational Gaussian Process. *Variational learning of inducing variables in sparse gaussian processes'' in ''Artificial Intelligence and Statistics,* 2009, 567-574